# EUROPEAN PATENT SPECIFICATION

(11) **EP 0 377 415 B1**
(45) Date of publication and mention of the grant of the patent: **10.02.1993**
(21) Application number: 89830475.3
(22) Date of filing: 31.10.1989
(51) Int. Cl.: B60K 17/344

(54) **Four-wheel-drive transmission for motor cars**
Vierradantrieb für Kraftfahrzeuge
Transmission à quatre roues motrices pour véhicule automobile

(30) Priority: 07.11.1988 IT 5351488 U
(43) Date of publication of application: 11.07.1990
(73) Proprietor: FIAT AUTO S.p.A., 10135 Torino (IT)
(72) Inventor: Falzoni, Gian Luigi, I-10141 Torino (IT); Nepote, Luciano, I-10076 Nole Torino (IT)
(74) Representative: Quinterno, Giuseppe

(56) References cited:
- EP-A- 0 072 990
- EP-A- 0 091 406
- FR-A- 2 532 708

## Description

The present invention relates in general to four-wheel-drive motor cars provided with devices for the engagement and disengagement of the drive to the rear axle.

The invention is particularly concerned with a four-wheel-drive transmission, of the type set forth in the pre-characterising portion of the claim.

A transmission of this type is described and illustrated in European patent application EP-A-72990. In this known transmission, the driven bevel gear of the power take-off meshes with a driving bevel gear of the power take off meshes with a driving bevel gear carried by an auxiliary power transfer gear shaft rotatable on an axis parallel to the front drive shafts. The ring gear coupled for rotation with the differential input member is a cylindrical gear fixed on the differential gear housing and meshing with a second cylindrical gear coaxially carried by the power transfer gear shaft and selectively rotatable or coupled for rotation relative thereto. This construction is complicated and cumbersome, due to the presence of the above mentioned power transfer components in the region placed rearwardly to the differential gear unit.

The object of the present invention is to produce a transmission of the type defined above which, being arranged to enable the drive to be transmitted selectively at normal speed or at reduced speed, both in the case of two-wheel drive and in the case of four-wheel drive is structurally simple, economical and compact.

According to the invention, this object is achieved by virtue of the feature recited in the characterising portion of the claim.

The invention will now be described in detail with reference to the appended drawings, provided purely by way of non-limiting example, in which:
Figure 1 is a schematic longitudinal sectional view of part of a four-wheel-drive transmission according to the invention, and

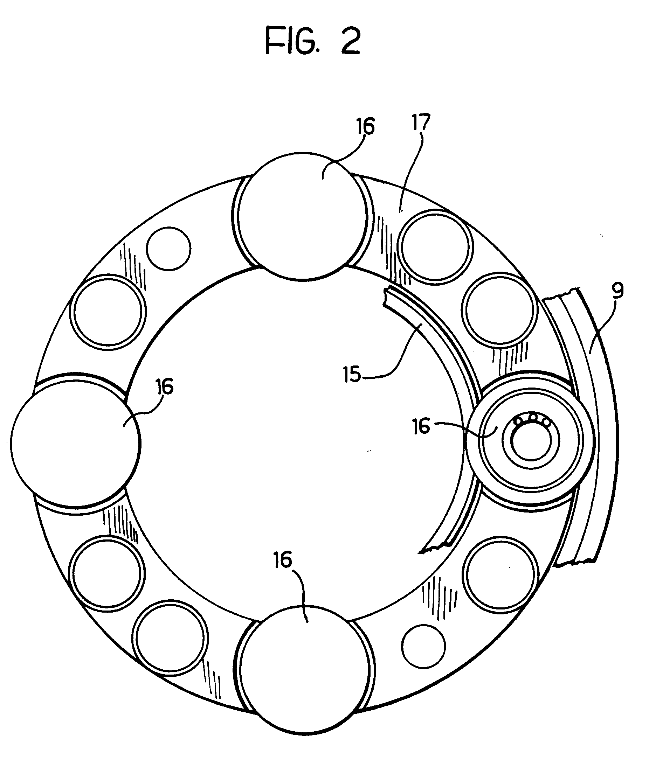

Figure 2 is a cross-section taken on the line II-II of Figure 1.

With reference to the drawings, the four-wheel-drive transmission according to the invention comprises essentially a gearbox-differential unit, generally indicated 1, for transmitting the drive from the engine (not illustrated) of the car to two front drive-shafts 2, 3 and, through a power take-off 4 driving a longitudinal transmission shaft, not illustrated, for transmitting the drive to the two rear drive-shafts of the car through a rear differential, not illustrated. The components of the transmission which are not illustrated, and particularly those connected with the transmission of the drive to the rear drive-shafts, are similar to those described in the aforementioned European patent application and will not therefore be described for the sake of brevity. For the purposes of the invention, it is sufficient to explain that the longitudinal transmission shaft is driven by the power take-off 4 through an engagement and disengagement device which enables the rear-wheel drive to be engaged and disengaged selectively.

The gearbox-differential unit 1 is housed within a gearbox casing 5 having a portion 6 which coaxially surrounds the front drive-shafts 2, and includes a wheel 7 with an external ring gear 8 which constitutes the output member of the gearbox and an internal ring gear 9. In the manner explained below, the gear 7 drives a front epicyclic differential with conventional planetary bevel gears 10 to distribute the drive to the drive-shafts 2 and 3.

The housing or input member of the differential 10 is indicated 11 and is coupled for rotation at 12 to a hollow shaft 13 which is rotatable coaxially with the drive-shafts 2. According to the prior art, the hollow shaft 13 is in turn coupled for rotation directly with the output member 8 of the gearbox at its end opposite the housing 11 of the differential 10. According to the invention, however, an epicyclic reduction unit 14 housed in the casing 5 of the gearbox, substantially concentrically with the gear 7, is interposed between the hollow shaft 13 and the output member 8 of the gearbox.

The epicyclic reduction unit 14 includes the internal ring gear 9 of the wheel 7, a sun wheel 15 which is rotatable coaxially with the hollow shaft 13, and a series of planet wheels 16 carried by a planet-carrier 17 and meshed with the ring gear 9 and with the sun wheel 15. The planet-carrier 17 is fixed at 18 to the hollow shaft 13 and carries a ring gear 19 which meshes with the power take-off 4 for transmitting the drive to the rear drive-shafts.

A tubular shaft 20 fixed torsionally to the sun wheel 15 is rotatable coaxially on the hollow shaft 13 and extends almost up to the housing 11 of the epicyclic differential 10. The end of the tubular shaft 20 adjacent the housing 11 carries a toothed member 21 on which is mounted a slidable clutch sleeve 22 with two opposed sets of frontal teeth 23, 24 for meshing with teeth 25 carried by the portion 6 of the gearbox casing 5 and teeth 26 carried by the housing 11 of the epicyclic differential 10, respectively.

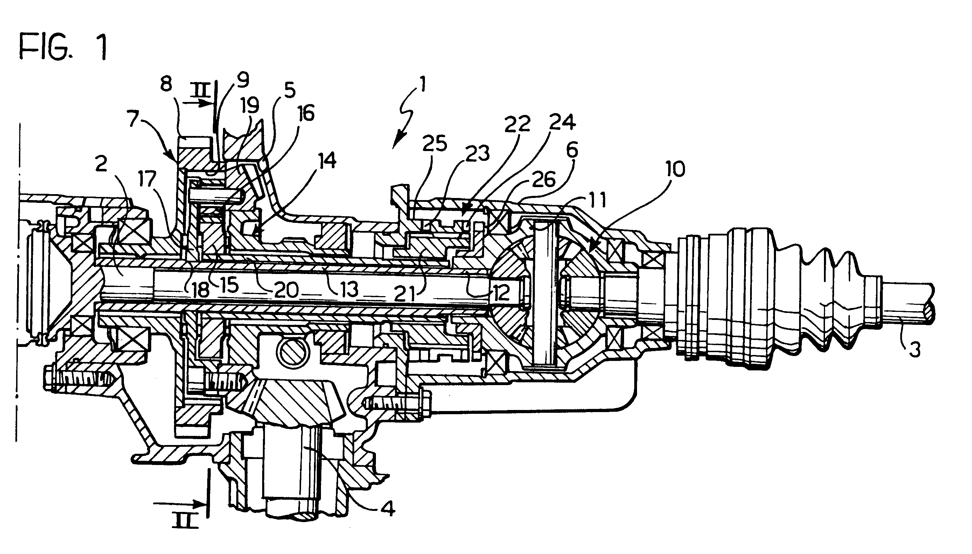

The operation of the transmission will now be described with reference to the two operating positions into which the clutch member 22 can selectively be moved, to the right and the left of the central position illustrated in Figure 1, respectively.

In the first case, which corresponds to the meshing of the teeth 24 of the sleeve 22 with the teeth 26 of the housing 11 of the epicyclic differential 10, the tubular shaft 20 and the hollow shaft 13 are fast for rotation so that the reduction unit 14 is inoperative and the drive is transmitted from the output member 8 of the gearbox to the differential 10 and to the power take-off 4 at normal speed.

In the other position, which corresponds to the meshing of the teeth 23 of the clutch sleeve 22 with the teeth 25 of the gearbox casing 5, the tubular shaft 20 is kept stationary and the reduction unit 14 is therefore operative. The drive is thus transmitted from the output member 8 of the gearbox to the epicyclic differential 10 and to the power-take-off at reduced speed.

## Claims

1. A four-wheel-drive transmission for motor cars with a device for engaging and disengaging the drive to the rear axle, comprising a gearbox casing (5) and a gearbox-differential unit (1) for transmitting the drive to a pair of front drive-shafts (2, 3), the gearbox-differential unit (1) being provided with a power take-off (4) having a driven bevel gear for transmitting the drive to a pair of rear drive-shafts and including a toothed gearbox output member (8), a differential input member (11), an epicyclic reduction unit (14) housed in the gearbox casing (5) substantially concentrically with the output member (8) of the gearbox and a hollow shaft (13) coaxial with one of the front drive-shafts (2) and coupling for rotation, through the epicyclic reduction unit (14), the said gearbox output member (8) and differential input member (11), wherein the said epicyclic reduction unit (14) comprises:
- a ring gear (9) fast with the output member (8) of the gearbox,
- a sun wheel (15) which is rotatable coaxially with the hollow shaft (13),
- a planet-carrier (17) fixed to the hollow shaft (13) and carrying a plurality of planet wheels (16) meshed with the ring gear (9) and the sun wheel (15),
- a ring gear (19) coupled for rotation with the differential input member (11) for operating the power take-off (4), and
- a tubular shaft (20) which is rotatable coaxially with the hollow shaft (13) and has one end fixed to the sun wheel (15), the other end of the tubular shaft (20) carrying a toothed member (21) which is operatively associated with a clutch device (22) movable selectively between a normal-speed position in which the tubular shaft (20) is coupled for rotation with the input member (11) of the differential (10) and a reduced-speed position in which the tubular shaft (20) is locked against rotation relative to the gearbox casing (5, 6), characterised in that the said ring gear (19) for operating the power take-off (4) is a driving bevel gear directly fixed to the planet-carrier (17) of the reduction unit (14) and meshing with the said driven bevel gear of the power take-off (4).

## Patentansprüche

1. Vierrad-Antriebsübertragung für Kraftfahrzeuge, mit einer Einrichtung zum Ankuppeln und Abkuppeln des Antriebes zur Hinterachse, umfassend ein Getriebegehäuse (5) und eine Getriebe-Differential-Einheit (1) zum Übertragen der Antriebsleistung zu zwei Vorderrad-Antriebswellen (2, 3), wobei die Getriebe Differential-Einheit (1) mit einer Leistungsabzweigung (4) versehen ist, die ein angetriebenes Kegelrad zum Übertragen der Antriebsleistung zu zwei Hinterrad-Antriebswellen hat und ein verzahntes Getriebe-Ausgangselement (8) umfaßt, ein Differential-Eingangselement (11), eine Epizykloiden-Untersetzungseinheit (14), die im Getriebegehäuse (5) im wesentlichen konzentrisch zum Ausgangselement (8) des Getriebes und zu einer Hohlwelle (13) angeordnet ist, welche koaxial zu einer der Vorderrad-Antriebswellen (2) ist und das Getriebe-Ausgangselement (8) sowie das Differential-Eingangselement (11) über die Epizykloiden-Untersetzungseinheit (14) zu gemeinsamer Drehung kuppelt, wobei die Epizykloiden-Untersetzungseinheit (14) umfaßt:
- eine mit dem Ausgangselement (8) des Getriebes fest verbundene Ringverzahnung (9),
- ein Sonnenrad (15), welches koaxial zur Hohlwelle (13) drehbar gelagert ist,
- einen Planetenträger (17), welcher fest auf der Hohlwelle (13) angeordnet ist und mehrere Planetenräder (16) trägt, welche mit der Ringverzahnung (9) und dem Sonnenrad (15) im Eingriff sind,
- eine Ringverzahnung (19), die mit dem Differential-Eingangselement (11) drehgekuppelt ist und die Leistungsabzweigung (4) treibt, und
- eine rohrförmige Welle (20), die koaxial zur Hohlwelle (13) drehbar ist und deren eines Ende mit dem Sonnenrad (15) verbunden ist, wobei das andere Ende der rohrförmigen Welle (20) ein gezahntes Element (21) trägt, welches einer Kupplungseinrichtung (22) betriebsmäßig zugeordnet ist, die wahlweise zwischen einer Normalgeschwindigkeitsstellung, bei der die rohrförmige Welle (20) mit dem Eingangselement (11) des Differentials (10) drehgekoppelt ist, sowie einer Niedriggeschwindigkeitsstellung verstellbar ist, bei der die rohrförmige Welle (20) relativ zum Getriebegehäuse (5, 6) drehblockiert ist, dadurch gekennzeichnet, daß die Ringverzahnung (19) zum Antreiben der Leistungsabzweigung (4) ein treibendes Kegelrad ist, welches direkt mit dem Planetenträger (17) der Untersetzungseinheit (14) verbunden ist und mit dem angetriebenen Kegelrad der Leistungsabzweigung (4) im Eingriff ist.

## Revendications

1. Transmission à quatre roues motrices pour véhicules automobiles comprenant un dispositif permettant d'embrayer et de débrayer l'entraînement de l'essieu arrière, comprenant un carter (5) de boîte de vitesses et une unité boîte de vitesses-différentiel (1) destinée à transmettre la force motrice à une paire de demi-arbres avant (2, 3), l'unité boîte de vitesses-différentiel (1) étant munie d'une prise de force (4) possédant une roue dentée conique entraînée pour transmettre la force motrice à une paire de demi-arbres arrière et comprenant un élément denté (8) de sortie de la boîte de vitesses, un élément d'entrée (11) du différentiel, une unité de réduction épicycloïdale (14) logée dans le carter (5) de la boîte de vitesses, sensiblement concentriquement à l'élément de sortie (8) de la boîte de vitesses, et un arbre creux (13) coaxial à l'un des demi-arbres avant (2) et qui accouple en rotation, par l'intermédiaire de l'unité de réduction épicycloïdale (14), ledit élément de sortie (8) de la boîte de vitesses et ledit élément d'entrée (11) du différentiel, dans laquelle ladite unité de réduction épicycloïdale (14) comprend :
- une couronne dentée (9) solidaire de l'élément de sortie (8) de la boîte de vitesses,
- une roue planétaire (15) qui est montée rotative coaxialement à l'arbre creux (13),
- un porte-satellites (17) fixé à l'arbre creux (13) et portant une pluralité de roues satellites (16) en prise avec la couronne dentée (9) et avec la roue planétaire (15),
- une couronne dentée (19) couplée pour la rotation à l'élément denté (11) du différentiel pour mettre la prise de force (4) en action, et
- un arbre tubulaire (20) qui peut tourner coaxialement à l'arbre creux (13) et possède une extrémité fixée à la roue planétaire (15), l'autre extrémité de l'arbre tubulaire (20) portant un élément denté (21) associé fonctionnellement à un dispositif d'embrayage (22) qui peut être déplacé sélectivement entre une position de vitesse normale, dans laquelle l'arbre tubulaire (20) est couplé pour la rotation à l'élément d'entrée (11) du différentiel (10) et une position de vitesse réduite, dans laquelle l'arbre tubulaire (20) est bloqué à l'encontre de la rotation par rapport au carter (5, 6) de la boîte de vitesses, caractérisée en ce que ladite couronne dentée (19) servant à mettre la prise de force (4) en action est une roue dentée conique motrice directement solidaire du porte-satellites (17) de l'unité de réduction (14) et qui engrène avec ladite roue dentée conique entraînée de la prise de force (4).
